# EUROPÄISCHE PATENTSCHRIFT

(11) **EP 2 079 607 B1**
(45) Veröffentlichungstag und Bekanntmachung des Hinweises auf die Patenterteilung: **07.07.2010**
(21) Anmeldenummer: 07820710.7
(22) Anmeldetag: 28.09.2007
(51) Int. Cl.: B60P 1/02, B60P 1/64

(54) **FLURGEBUNDENES TRANSPORTFAHRZEUG, INSBESONDERE FÜR DEN TRANSPORT VON CONTAINERN**
FLOOR-BOUND TRANSPORTATION VEHICLE, IN PARTICULAR FOR THE TRANSPORTATION OF CONTAINERS
CHARIOT DE TRANSPORT RELIÉ AU SOL, EN PARTICULIER POUR LE TRANSPORT DE CONTENEURS

(30) Priorität: 19.10.2006 DE 102006049372; 23.08.2007 DE 102007039778
(43) Veröffentlichungstag der Anmeldung: 22.07.2009
(73) Patentinhaber: Gottwald Port Technology GmbH, 40597 Düsseldorf (DE)
(72) Erfinder: FRANZEN, Hermann, 41238 Mönchengladbach (DE); MOUTSOKAPAS, Jannis, 40789 Monheim (DE); WIESCHEMANN, Armin, 46119 Oberhausen (DE)
(74) Vertreter: Moser & Götze
(86) Internationale Anmeldenummer: PCT/EP2007/060323
(87) Internationale Veröffentlichungsnummer: WO 2008/046728

(56) Entgegenhaltungen:
- EP-A- 0 136 970
- DE-A1- 4 138 512
- US-A- 2 449 863
- US-A- 3 214 136
- US-A- 3 266 774
- US-A- 3 497 092
- US-A- 4 792 272
- US-A- 5 525 019

## Beschreibung

Die Erfindung betrifft ein flurgebundenes Transportfahrzeug, insbesondere für den Transport von Containern, mit mindestens einer auf einem Fahrzeugrahmen des Transportfahrzeuges angeordneten Hubplattform, die aus einer abgesenkten Transportstellung über einen Hubantrieb in eine angehobene Übergabestellung anhebbar beziehungsweise umgekehrt absenkbar ist.

Aus der europäischen Patentschrift EP 0 302 569 B1 ist bereits ein System zum Be- und Entladen eines Schiffes mit Containern bekannt. Dieses System umfasst mindestens einen Kaikran zum Be- und Entladen der an einem Kai festgemachten Container-Schiffe. Mittels der Kaikrane werden die Container von einem Transportfahrzeug aufgenommen beziehungsweise werden die Container auf diesem Transportfahrzeug abgestellt. Dieses Transportfahrzeug ist auf dem Kai ohne Verwendung von Schienen verfahrbar und wird von einer Steuerung automatisch geführt. Der Container wird von dem Transportfahrzeug an einer stationären Übergabestation von dem Transportfahrzeug abgeladen beziehungsweise von dem Transportfahrzeug aufgenommen. Diese Übergabestation besteht in Wesentlichen aus ortsfesten Tragtischen, auf die die Container abgestellt beziehungsweise von denen die Container aufgenommen werden. Diese. Tragtische sind tragarmförmig ausgebildet und unterstützen den Container im Bereich ihrer Längsseiten von unten. Entsprechend ist der Abstand der gegenüberliegenden Tragtische schmaler als die Breite der Container ausgeführt. Um den Container von dem Tragtisch aufnehmen beziehungsweise hierauf abstellen zu können, ist vorgesehen, dass das Transportfahrzeug eine Plattform für den Transport der Container aufweist, entweder das Transportfahrzeug insgesamt oder nur dessen Plattform zur Übernahme eines Containers angehoben wird und anschließend das Transportfahrzeug mit dem nunmehr auf dessen Plattform ruhenden Container aus dem Bereich der Tragtische herausfährt. Bei Verwendung einer heb- und senkbaren Plattform ist noch für die Weiterfahrt des Transportfahrzeuges die Plattform abzusenken. Das Abstellen der Container auf dem Tragtisch erfolgt hierbei in entgegen gesetzter Reihenfolge. Damit das Transportfahrzeug die Container von der Übergabestation aufnehmen kann, weist die Hubplattform eine Breite auf, die geringer ist als der Abstand zwischen den gegenüberliegenden Tragtischen. Von dieser Übergabestation werden die Container dann von einem Portalkran in einem automatischen Betrieb aufgenommen und in einem Container-Speicherdepot abgestellt beziehungsweise von dem Portalkran dort abgestellt. An dem dem seeseitigen Portalkran gegenüberliegenden Ende des Container-Speicherdepots ist ein weiterer landseitiger Portalkran vorgesehen, der im Bereich des Container-Speicherdepots im Automatikbetrieb und außerhalb des Container-Speicherdepots im Manuellbetrieb betreibbar ist. Auch weist dieser landseitige Portalkran einen Drehtisch auf, um die Container um 90° zu drehen und anschließend an Landfahrzeuge zum Ab- bzw. Antransport abzugeben beziehungsweise hiervon aufzunehmen.

Des Weiteren ist in Bezug auf das Transportfahrzeug ausgeführt, dass die Plattform durch einen mechanischen, pneumatischen oder hydraulischen Hubantrieb angehoben und abgesenkt werden kann.

Die gattungsgemäße Patentschrift US 2,449,863 betrifft ein flurgebundenes Transportfahrzeug für die Anbringung von Bomben unter die Tragflächen von Flugzeugen. Dieses Transportfahrzeug weist eine Hubvorrichtung mit einem Hubtisch zur Aufnahme der Bomben auf. In Fahrtrichtung des Transportfahrzeuges gesehen vorne und hinten ist der Hubtisch jeweils über einen Kniehebel auf dem Transportfahrzeug abgestützt. Um den Hubtisch aus einer abgesenkten Transportstellung in eine angehobene Übergabestellung anzuheben, ist jeder der Kniehebel über einen Hydraulikzylinder mit dem Transportfahrzeug verbunden. Jeder der Hydraulikzylinder ist über Handpumpen manuell betätigbar. Da zwei voneinander unabhängige Hydraulikzylinder vorgesehen sind, kann der Hubtisch in eine bis zu +/-15° gekippte Übergabestellung angehoben werden. Außerdem ist der Hubtisch über einen Längslenker an dem Fahrzeug gerührt.

Aus der weiteren Patentschrift US 5,525,019 ist ein Fahrzeug zur Beladung von Flugzeugen mit Stückgut bekannt. Dieses Fahrzeug weist in üblicher Weise einen Führerstand und eine Plattform für das zu verladene Stückgut auf. Die Plattform für das Stückgut ist aus einer Transportstellung über einen Scherenhubtisch in einer Übergabestellung anhebbar. Der zu dieser Plattform benachbarte Führerstand ist über einen eigenen Hubtisch mittels einer Hubschere ebenfalls anheb- und absenkbar.

Die Patentschrift US 3,319,932 betrifft einen Anhänger mit einer heb- und senkbaren Plattform, um beispielsweise auf Paletten transportierte Stückgüter von oder zu einem Frachtflugzeug zu transportieren. Der Anhänger besteht im Wesentlichen aus einem Fahrwerk mit Rädern, auf dem über zwei vordere Kniehebel und zwei hintere Kniehebel die Plattform befestigt ist. Auch sollen diese Kniehebel ein Kippen der sonst horizontalen Plattform erlauben. Einer Vorderansicht des Anhängers ist zu entnehmen, dass die hinteren rechten und linken Kniehebel voneinander beabstandet sind und jeweils für sich gesehen eine Abstützbasis aufweisen, die in etwa einem Zehntel der Breite der Plattform entsprechen. Darüber hinaus bestehen die einzelnen Kniehebel beispielsweise aus oberen Armen die je Kniehebel für sich gesehen jeweils mit Abstand zueinander angeordnet sind. Insgesamt ist somit die Breite der Arme nur einen Bruchteil der Breite der Plattform.

Ausgehend von diesem Stand der Technik liegt der vorliegenden Erfindung die Aufgabe zugrunde, ein automatisch geführtes Fahrzeug, insbesondere für Container, zu schaffen, welche einen verbesserten Hubantrieb der Plattform zur Aufnahme und Abgabe der Lasten, insbesondere Container, aufweist.

Diese Aufgabe wird mit einem automatisch geführten Fahrzeug mit den Merkmalen des Anspruchs 1 gelöst. Vorteilhafte Ausgestaltungen der Erfindung sind in den Unteransprüchen 2 bis 12 angegeben.

Erfindungsgemäß wird bei einem flurgebundenen Transportfahrzeug, insbesondere für den Transport von Containern, mit mindestens einer auf einem Fahrzeugrahmen des Transportfahrzeuges angeordneten Hubplattform, die aus einer abgesenkten Transportstellung über einen Hubantrieb in eine angehobene Übergabestellung anhebbar beziehungsweise umgekehrt absenkbar ist, wobei jede Hubplattform über in Fahrtrichtung des Transportfahrzeuges gesehen ausschließlich zwei Kniehebel auf dem Fahrzeugrahmen befestigt ist, die Hubplattform über die zwei Kniehebel anhebbar beziehungsweise absenkbar ist, der Hubantrieb auf die zwei Kniehebel wirkt und die Hubplattform für die Hub- und Senkbewegung an dem Transportfahrzeug geführt ist, wobei jeder Kniehebel in Fahrtrichtung des Transportfahrzeuges gesehen sich über mehr als die Hälfte der Breite der Hubplattform, insbesondere mehr als 75% der Breite der Hubplattform, erstreckt, ein verbesserter Hubantrieb der Plattform zur Aufnahme und Abgabe der Container dadurch erreicht, dass je Hubplattform ein Hubantrieb vorgesehen ist, der gemeinsam auf die beiden Kniehebel wirkt. Durch die Verwendung der Kniehebel wird einerseits eine stabile Abstützung der Hubplattform auf dem Fahrzeugrahmen erreicht und andererseits eine günstige Umlenkung der im Wesentlichen in Fahrrichtung gerichteten Schubkraft in eine Hubkraft. Außerdem kann der gesamte Hubantrieb somit eine geringe Bauhöhe aufweisen und auf dem Fahrzeugrahmen des Transportfahrzeuges und unterhalb beziehungsweise innerhalb der kastenförmig und nach unten offen ausgebildeten Hubplattform angeordnet werden.

Vorteilhafter Weise ist vorgesehen, dass in Fahrtrichtung des Transportfahrzeuges je Hubplattform zwei Kniehebel vorgesehen sind. Die Hubkraft kann somit gleichmäßiger auf die Hubplattform verteilt werden. Hierbei sind in Fahrtrichtung des Transportfahrzeuges gesehen der erste Kniehebel vorne und der zweite Kniehebel hinten an der Hubplattform angeordnet ist.

In konstruktiver Ausgestaltung ist vorgehen, dass jeder Kniehebel aus einem erstem Kniehebelarm und aus einem zweiten Kniehebelarm besteht, die über einen Kniehebelgelenk miteinander verbunden sind. Hierbei ist der erste Kniehebelarm an seinem dem Kniehebelgelenk abgewandten Ende über eine Achse an dem Fahrzeugrahmen gelagert und der zweite Kniehebelarm an seinem dem Kniehebelgelenk abgewandten Ende über eine Achse an der Hubplattform.

Um die Hub- und Senkbarkeit der Hubplattform zu erreichen, ist vorgesehen, dass die unteren Achsen, die Achsen der scharnierartigen Kniehebelgelenke und die oberen Achsen parallel zueinander verlaufen. Hierbei sind die beiden Kniehebel derart zwischen der Hubplattform und dem Fahrzeugrahmen angeordnet, dass die Kniehebelgelenke sich bei einer Bewegung der Hubplattform aus der Übergabestellung in die Ruhestellung aufeinander zu bewegen.

Um eine Führung der Hubplattform in Hub- und Senkrichtung zu erreichen, ist vorgesehen, dass die Hubplattform über mindestens eine Längslenker an dem Fahrzeugrahmen geführt ist, der Längslenker an seinem ersten Ende über eine erste Achse an der Hubplattform angelenkt ist und an seinem gegenüberliegenden zweiten Ende über eine zweite Achse an dem Fahrzeugrahmen angelenkt ist. Hierbei ist in Fahrtrichtung des Transportfahrzeuges gesehen rechts und links neben der Hubplattform jeweils ein Längslenker angeordnet ist und die beiden Längslenker parallel zueinander verlaufen.

Des Weiteren ist, um die Hub- und Senkbarkeit der Hubplattform zu erreichen, vorgesehen, dass die erste Achse und die zweite Achse parallel zueinander verlaufen und parallel zu den unteren Achsen, den Achsen der scharnierartigen Kniehebelgelenke und den oberen Achsen verlaufen.

Außerdem ist in vorteilhafter Weise vorgesehen, dass in Fahrtrichtung des Transportfahrzeuges gesehen zwei Hubplattformen unmittelbar hintereinander unter Einhaltung eines Abstands angeordnet sind. Hierbei sind die Hubplattformen derart dimensioniert, dass in Fahrtrichtung des Transportfahrzeuges gesehen von jeder Hubplattform ein 20-Fuß-Container aufnehmbar ist oder in Fahrtrichtung des Transportfahrzeuges gesehen von beiden Hubplattformen gemeinsam ein 40-Fuß-Container beziehungsweise ein 45-Fuß-Container aufnehmbar ist. Das Transportfahrzeug ist somit vielseitiger einsetzbar.

In konstruktiv vorteilhafter Ausgestaltung besteht der Hubantrieb aus einem auf dem Transportfahrzeug angeordneten Antriebsmotor, der über einen Stettspindettrieb auf den Kniehebel wirkt. Alternativ besteht der Hubantrieb aus einem auf dem Transportfahrzeug angeordneten Antriebsmotor, der über ein Getriebe und zwei Stellspindeltriebe auf die beiden Kniehebel wirkt.

Nachfolgend wird die Erfindung anhand eines in einer Zeichnung dargestellten Ausführungsbeispiels näher erläutert. Es zeigen:
Figur 1 eine perspektivische Ansicht eines automatisch geführten Fahrzeuges in einer Übergabestation,
Figur 2 eine perspektivische Ansicht, eines Fahrzeuges gemäß Figur 1 außerhalb einer Übergabestation,
Figur 3 eine Vorderansicht von Figur 1, bei der die Hubplattform des Fahrzeuges angehoben ist,
Figur 4 eine Ansicht gemäß Figur 3 mit abgesenkter Hubplattform,
Figur 5 eine Ansicht gemäß Figur 2, bei der die Hubplattform und der Hubantrieb nur teilweise dargestellt sind,
Figur 6 eine Seitenansicht einer Hubplattform in der angehobenen Stellung und
Figur 7 eine Draufsicht auf eine Hubplattform eines Fahrzeuges gemäß Figur 2.

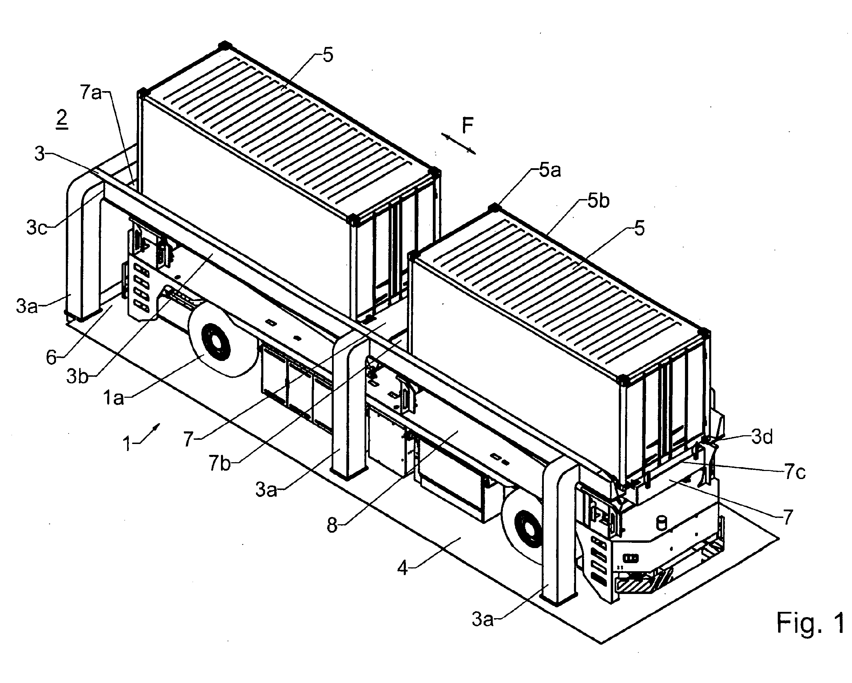

Die Figur 1 zeigt eine perspektivische Ansicht eines automatisch geführten Fahrzeuges 1 innerhalb einer Übergabestation 2. Eine derartige Übergabestation kann als Schnittstelle zwischen den automatisch geführten Fahrzeugen 1 und einem anderen Transportmittel wie beispielsweise einem Portalkran mit einem Spreader-Rahmen als Lastaufnahmemittel oder einem üblicherweise als Straddle-Carrier bezeichneten hochbeinigen und bemannten Container-Transportfahrzeug dienen.

Die Übergabestation 2 besteht im Wesentlichen aus einem stationären Traggestell 3, das aus Beinen 3a in Form von vertikalen Pfosten und hieran befestigten Tragschienen 3b besteht. Die Beine 3a ruhen an ihrem unteren Ende auf einem Boden 4, der üblicherweise im Hakenbereich Bestandteil eines Kais ist. An ihrem dem Boden 4 abgewandten Ende sind die Beine 3a leicht noch innen abgewinkelt, so dass diese in Fahrtrichtung F des Fahrzeugs gesehen leicht L-förmig aussehen. An der sich somit im Wesentlichen vertikal erstreckenden oberen Endfläche 3c der Beine 3a ist dann die Tragschiene 3b befestigt. Insgesamt sind sechs Beine 3a vorgesehen, von denen jeweils in Fahrtrichtung F gesehen rechts und links jeweils drei Beine mit Abstand untereinander und zu dem in die Übergabestation 2 eingefahrenen Fahrzeug 1 angeordnet sind. Die rechten und linken Beine 3a sind auch jeweils gegenüberliegend angeordnet. Der Abstand a zwischen zwei gegenüberliegend angeordneten Beinen 3a ist, um ein Einfahren des Fahrzeuges 1 zur ermöglichen, größer als die Breite b des Fahrzeuges 1 gewählt. Hierbei ist der Abstand a etwa 100mm größer als die Breite b. Die jeweils an den Endflächen 3c der Beine 3a befestigten und gegenüberliegenden Tragschienen 3b weisen in Fahrtrichtung F gesehen einen L-förmigen Querschnitt auf, wobei deren langer Schenkel an den Endflächen 3c der Beine 3a befestigt ist und der kurze Schenkel eine horizontale und nach innen weisende Tragfläche 3d für den hierauf abzustellenden Container 5 bildet. Die Container 5 ruhen mit ihren stabilen und vorzugsweise in den unteren Ecken angeordneten Eckbeschlägen 5a (corner castings) und ihren dazwischen liegenden unteren Längsseiten 5b auf den Tragflächen 3d der Tragschiene 3b, wenn sie von dem Fahrzeug 1 oder einem anderen Transportmittel dort abgestellt worden sind.

Für das Abstellen der Container 5 auf den Tragflächen 3d beziehungsweise für das Aufnehmen der Container 5 von den Tragflächen 3d weist das Fahrzeug 1 einer Hubplattform 7 auf, der relativ zu einem Fahrzeugrahmen 8 des Fahrzeuges 1 vertikal anhebbar und absenkbar ist. Die Hubhöhe der Hubplattform 7 beträgt etwa 600mm. Der Figur 1 ist zu entnehmen, dass auf dem Fahrzeugrahmen 8 in Fahrtrichtung F des Fahrzeuges 1 gesehen hintereinander eine erste Hubplattform 7a und eine zweite Hubplattform 7b angeordnet sind. Die Länge einer einzelnen Hubplattform 7a, 7b ist so gewählt, dass hierauf ein 20-Fuß-Container 5 transportiert werden kann. Auch ergänzen sich die erste Hubplattform 7a und die zweite Hubplattform 7b, für den Fall, dass sie synchron angehoben und abgesenkt werden, zu einer großen Hubplattform auf dem 40-Fuß-Container und auch 45-Fuß-Container transportiert werden können.

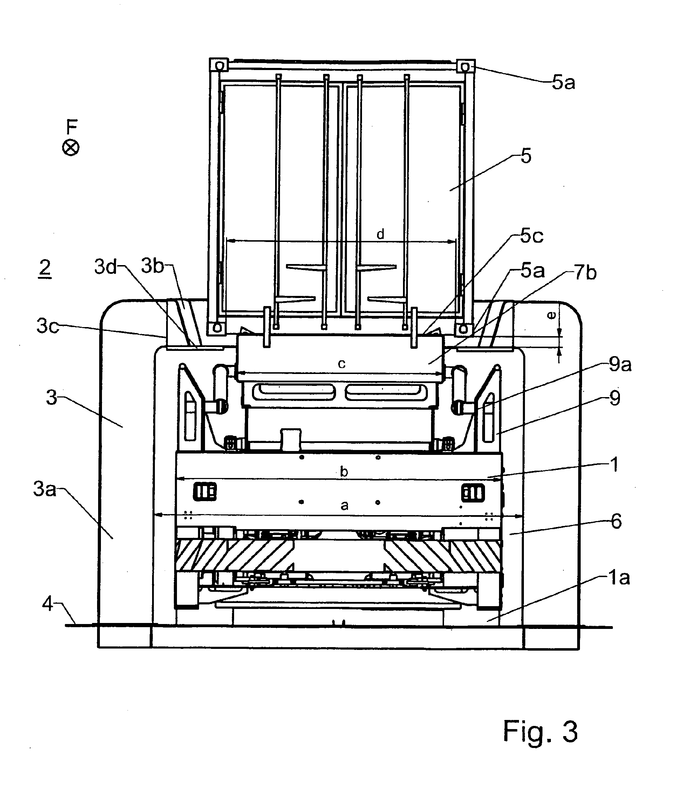

In der Figur 1 ist das Fahrzeug 1 gerade in die Übergabestation 2 eingefahren. Dies erfolgt üblicherweise im Automatikbetrieb, so dass der Einfahrkanal 6 mit der Breite a zwischen den gegenüberliegenden Beinen 3a des Traggestells 3 auch nur geringfügig größer sein muß als die Breite b des Fahrzeuges 1. Vor der Einfahrt des Fahrzeuges 1 in die Übergabestation 2 wurde das Fahrzeugs 2 kurz angehalten, um die erste Hubplattform 7a und die zweite Hubplattform 7b mit den jeweiligen Containern 5 jeweils aus ihrer unteren Transportstellung in ihre obere Hubstellung anzuheben. In dieser Hubstellung ragt die Hubfläche 7c oder jeweiligen Hubplattformen 7a, 7b, auf der der Container 5 ruht, über die sich vertikal nach innen erstreckenden Tragflächen 3d der Tragschienen 3b hinaus. Die Hubplattformen 7a, 7b weisen in Fahrtrichtung F gesehen eine geringere Breite c als der Abstand d zwischen den Tragflächen 3d der gegenüberliegenden Beine 3a des Traggestells 3 auf. Somit kann das Fahrzeug 1 mit in der Hubstellung angehobenen Hubplattformen 7a, 7b in die Übergabestation 2 einfahren, one das die Hubplattform 7a, 7b in Kontakt zu den Tragschienen 3b gerät. Auch befindet sich die Hubfläche 7c der Hubplattformen 7a, 7b oberhalb der Tragflächen 3d, so dass beim Einfahren des Fahrzeuges 1 in die Übergabestation 2 die Unterfläche 5c (siehe Figur 3) des Containers 5, insbesondere deren Eckbeschläge 5a, sich oberhalb der Tragflächen 3d befindet. Wenn das Fahrzeug 1 seine gewünschte Einfahrttiefe in die Übergabestation 2 erreicht hat, werden die Hubplattformen 7a, 7b in ihre Transportstellung abgesenkt und der Container 5 wird mit seinen Eckbeschlägen 5a und seiner Längsseite 5b auf den Tragflächen 3d der Tragschiene 3b abgestellt. Anschließend kann das Fahrzeug 1 die Übergabestation 2 mit ihren abgesenkten Hubplattformen 7a, 7b unter Zurücklassen der Container 5 auf dem Traggestell 3 wieder verlassen. Die Führungsfläche 9a verläuft hierbei parallel zur Fahrtrichtung F des Fahrzeuges 1.

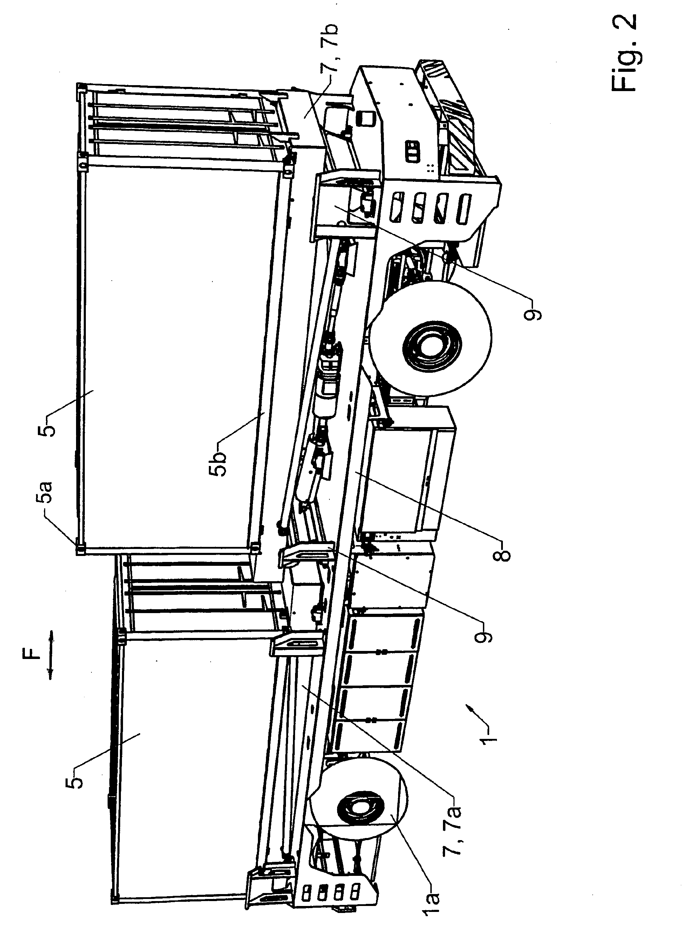

In der Figur 2 ist eine perspektivische Ansicht eines Fahrzeuges 1 gemäß Figur 1 dargestellt, bei dem zur Veranschaulichung der Funktion der Hubplattformen 7a, 7b die linke erste Hubplattform 7a in der abgesenkten Transportstellung und die rechte zweite Hubplattform 7b in seiner angehobenen Hubstellung zu sehen ist. In der abgesenkten Transportstellung liegt die erste Hubplattform 7a großflächig auf dem Fahrzeugrahmen 8 des automatisch geführten Fahrzeuges 1 auf. Um ein Absetzen der Container 5 auf der ersten Hubptattform 7a und der zweiten Hubplattform 7b zu erleichtern, die sich hierfür jeweils in ihrer unteren Transportstellung befinden, sind auf dem Fahrzeugrahmen 8 des Fahrzeuges 1 in Fahrtrichtung F des Fahrzeuges 1 gesehen rechts und links neben den Hubplattformen 7a, 7b jeweils in deren Anfangs- und Endbereichen trichterartige Führungselemente 9 vorgesehen. Diese Führungselemente 9 weisen eine nach innen zu den Hubplattformen 7a, 7b gerichtete Führungsfläche 9a auf, die sich ausgehend von dem Fahrzeugrahmen 8 nach oben erweitert und somit einen Container 5 beim Absenken auf die Hubplattformen 7a, 7b in Richtung auf die Hubplattform 7a, 7b seitlich ausrichtet.

Auch ist aus den Figuren 1 und 2 zu ersehen, dass das Fahrzeug 1 kein Schienenfahrzeug sondern ein Fahrzeug 1 mit Reifen 1a ist.

Die Figur 3 zeigt eine Vorderansicht von Figur 1 in Fahrtrichtung F des Fahrzeugs 1, das in der Übergabestation 2 steht. Der in dieser Figur 3 erkennbare Container 5 und die zweite Hubplattform 7b befinden sich in der angehobenen Hubstellung, wie es auch in der Figur 1 gezeigt ist. Es ist erkennbar, dass die Eckbeschläge 5a des Containers 5 sich mit einem Abstand e oberhalb der Tragflächen 3d der Tragschienen 3b befinden. Dieser Abstand e kann zwischen 50 und 150mm variieren je nach Ladungszustand des Containers 5 und Fülldruck der Reifen 1a.

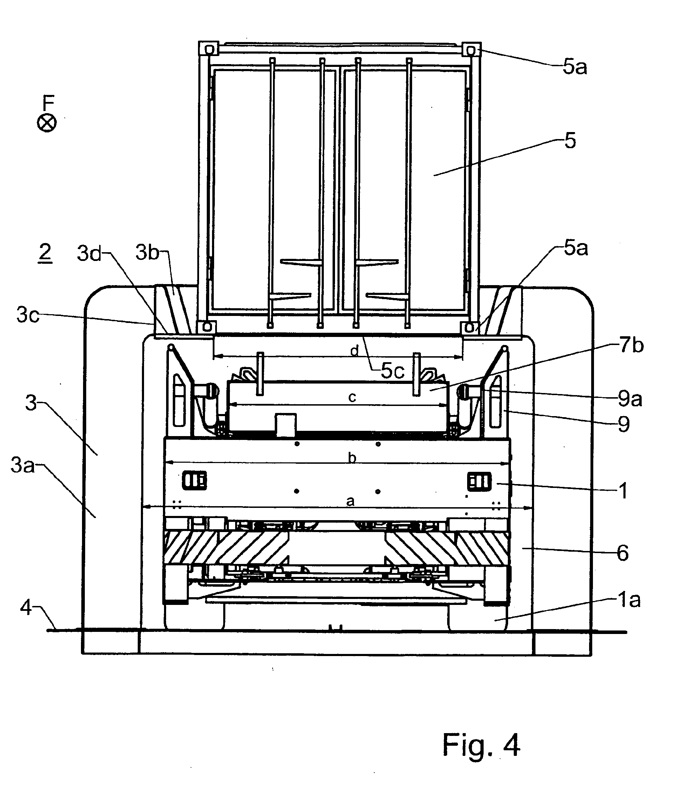

In der Figur 4 ist mit der Figur 3 übereinstimmende Ansicht dargestellt, wobei jedoch die zweite Hubplattform 7b sich in seiner abgesenkten Transportstellung befindet, ohne einen Container 5 zu tragen. Der Container 5 liegt mit seinen Eckbeschlägen 5a und seinen dazwischen liegenden Längsseiten 5b auf den Tragflächen 3d der Tragschiene 3b auf.

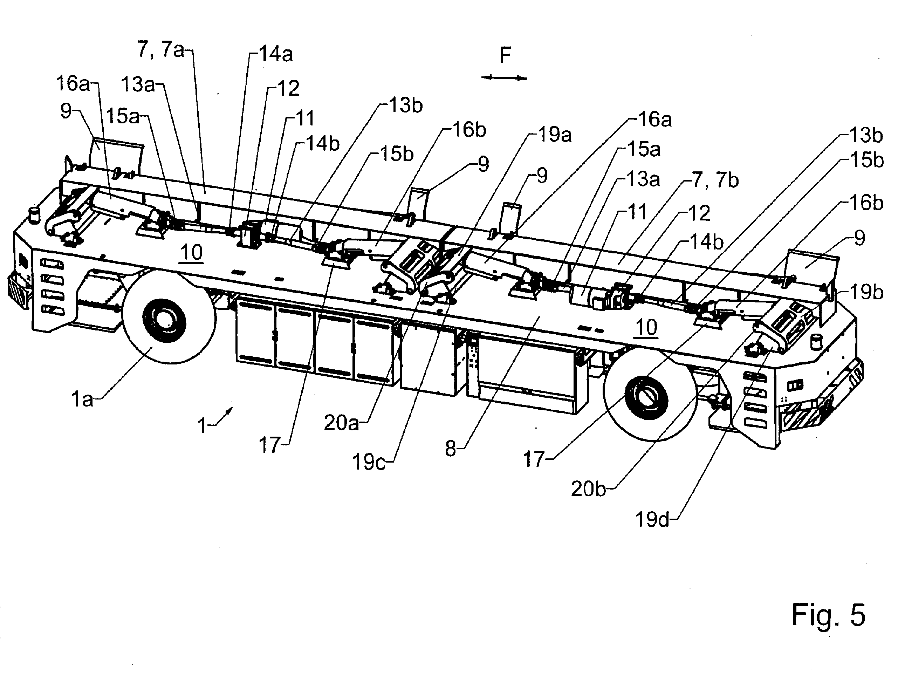

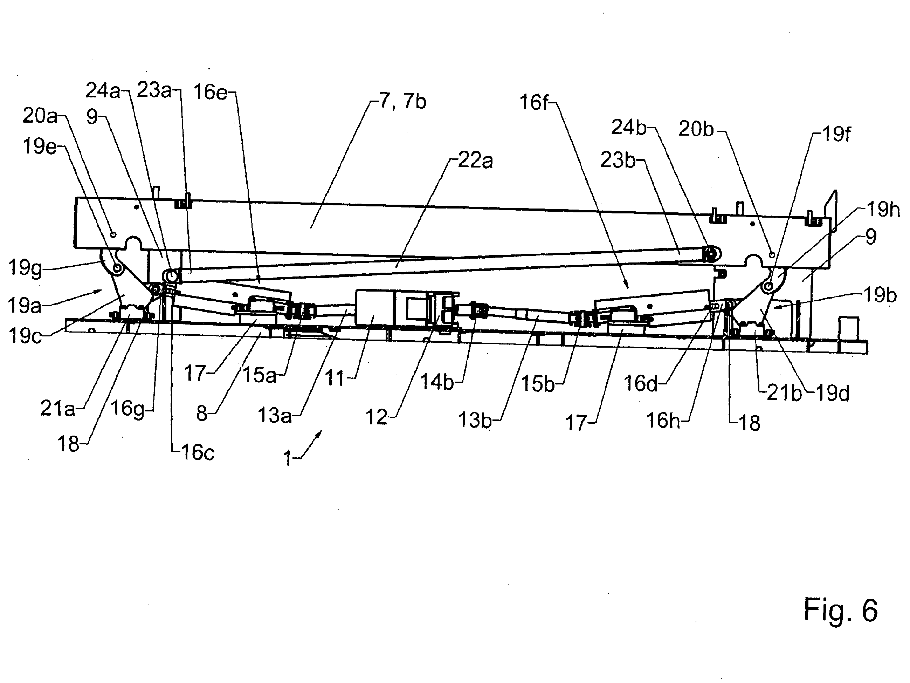

Die Figur 5 zeigt eine perspektivische Ansicht eines Fahrzeuges 1, bei dem jeweils nur ein hinterer Teil der ersten und zweiten Hubplattformen 7a, 7b gezeigt ist sowie auch nur ein Teil eines Hubantriebes 10 für die beiden Hubplattformen 7a, 7b. In der Figur 6 ist eine Seitenansicht der angehobenen zweiten Hubplattform 7b sowie den Hubantrieb 10 dargestellt.

Der Hubantrieb 10 besteht im Wesentlichen aus einem Antriebsmotor 11, der elektrisch oder hydraulisch sein kann, der über ein Getriebe 12, das Übersetzungs- und Verteilfunktion aufweist, und über jeweils ein erstes Kardangelenk 14a, 14b auf zwei Kardan-Wellen 13a, 13b wirkt. Die Kardan-Wellen 13a, 13b verlaufen im Wesentlichen parallel zur Fahrtrichtung F des Fahrzeuges 1, die auch üblicherweise der Längsrichtung des Fahrzeuges 1 entspricht. Das dem Getriebe 12 jeweils abgewandte Ende der Kardan-Wellen 13a, 13b wirkt über ein zweites Kardangelenk 15a, 15b, das doppelt kardanisch ausgebildet ist, auf einen Stellspindelantrieb 16a, 16b. Jeder der Stellspindelantriebe 16a, 16b weist in üblicher Weise eine von einer Abdeckung verdeckte Stellspindel 16c, 16d auf, die in einem Lagerbock 17 gelenkig und drehbar auf dem Fahrzeugrahmen 8 gelagert ist. Auf der Stellspindel 16c, 16d ist eine ebenfalls von der Abdeckung verdeckte Stellmutter 16e, 16f gelagert, die verdrehfest mit einem Stellhebel 16g, 16h (siehe Figur 6) verbunden ist. An seinem, dem Stellspindelantrieb 16a, 16b abgewandten Ende ist dieser Stellhebel 16g, 16h um eine im Wesentlichen horizontale Achse 18 gelenkig mit einem Kniehebel 19 verbunden. Je Hubplattform 7a, 7b ist ein Paar Kniehebel 19a, 19b vorgesehen, von dem einer vorne und einer hinten -jeweils in Fahrtrichtung F gesehen - an der Hubplattform 7a, 7b angreift. Die Kniehebel 19a, 19b weisen entsprechend einen ersten Kniehebelarm 19c, 19d auf, der über ein Kniehebelgelenk 19e, 19f mit einem zweiten Kniehebelarm 19g, 19h verbunden ist. Der Stellhebel 16g, 16h ist jeweils mit dem unteren ersten Kniehebelarm 19c, 19d verbunden. Das dem abgewandte Ende des zweiten Kniehebelarms 19g, 19h ist über eine weitere horizontale Achse 20a, 20b gelenkig mit der Hubplattform 7a, 7b verbunden. In Bezug auf die Kniehebel 19a, 19b ist der Figur 5 auch zu entnehmen, dass diese eine Breite aufweisen, die in etwa ¾ der Breite eines der Hubplattformen 7a, 7b entspricht. Es ist vorgehen, dass die Breite vorzugsweise mehr als 50%, insbesondere mehr als 75% der Breite der Hubplattform 7a, 7b aufweist.

In der Figur 5 ist, wie zuvor beschrieben, die erste Hubplattform 7a und auch die zweite Hubplattform 7b jeweils in seiner abgesenkten Transportstellung dargestellt. Entsprechenderweise befinden sich die Kniehebel 19a, 19b in ihrer eingeknickten Knickstellung, in der sie eine geringe vertikale Höhe aufweisen. Auch sind in dieser Knickstellung die Kniehebelgelenke 19e, 19f der Kniehebel 19a, 19b aufeinander zu bewegt. Außerdem ist das dem Kniehebelgelenk 19e, 19f abgewandte Ende des ersten Kniehebelarms 19c, 19d über eine im Wesentlichen horizontale Achse 21 a, 21b auf dem Fahrzeugrahmen 8 gelagert.

Dem gegenüber ist in der Figur 6 die Hubplattform 7b in seiner angehobenen Übergabestellung gezeigt. Entsprechend befinden sich die Kniehebel 19a, 19b in ihrer gestreckten Stellung, in der sie eine größere vertikale Höhe aufweisen als in der in der Figur 5 dargestellten abgesenkten Transportstellung. Des Weiteren ist der Figur 6 zu entnehmen, dass die gezeigte zweite Hubplattform 7b genauso wie die nicht dargestellte erste Hubplattform 7a zusätzlich über zwei Lenkerstange 22a, 22b gegenüber dem Rahmen 8 des Fahrzeuges 1 geführt ist. Die Lenkerstangen 22a, 22b verlaufe im Wesentlichen mit ihrer Längserstreckung in Fahrtrichtung F des Fahrzeuges 1 und in Bezug auf den im Wesentlichen in Abhängigkeit von der Standposition des Fahrzeuges horizontal ausgerichteten Fahrzeugrahmen 8 in angehobener Übergabestellung der Hubplattformen 7a, 7b leicht ansteigend und in der Transportstellung der Hubplattformen 7a, 7b leicht abfallend in Richtung des Fahrzeugrahmens 8. Des Weiteren verläuft jeder der beiden Längslenker parallel zur Lärigserstreckung der beiden Hubplattformen 7a, 7b sowie jeweils neben diesen. Auch weisen sie eine geringere Länge als die Hubplattformen 7a, 7b auf und sind mit geringem Abstand neben diesen angeordnet. Ein erstes Ende 23a der Längslenker 22a, 22b ist über eine im Wesentlichen horizontale und sich quer zur Fahrtrichtung F erstreckende Achse 24a angelenkt. Das gegenüberliegende zweite Ende 23b der Längslenker 22a, 22b ist um eine wiederum sich horizontal und im Wesentlichen rechtwinklig zur Fahrtrichtung F des Fahrzeuges 1 erstreckende weitere Achse 24b an der jeweiligen Innenseite des Führungselementes 9 angelenkt, jedoch unterhalb der Führungsfläche 9a der Führungselemente 9 für die Ausrichtung der Container 5. Diese beiden Längslenker 22a, 22b haben die Aufgabe die beiden Kniehebel 19a, 19b, an deren jeweils zweiten Kniehebelarm 19g, 19h die jeweilige Hubplattform 7a, 7b befestigt ist, gegenüber dem Fahrzeugrahmen 8 zu stabilisieren, damit die Streck- und Einknickbewegung der Kniehebel 19a, 19b auch in eine Hub- oder Senkbewegung der Hubplattformen 7a, 7b umgesetzt wird und nicht zu einer seitlichen Bewegung der Hubplattformen 7a, 7b führt. Die Anordnung der Längslenker 22a, 22b an den Hubplattformen 7a, 7b und den jeweiligen Führungselementen 9 des Fahrzeugrahmens 8 ist so gewählt, dass in Fahrtrichtung F des Fahrzeuges 1 gesehen die Hubplattform 7a, 7b in der abgesenkten Ruhestellung und in der angehobenen Übergabestellung an der gleichen Position - bezogen auf die Ausrichtung längs und quer zu dem Fahrzeugrahmen 8 - befindet. Zwischen der Obergabestellung und der Ruhestellung durchläuft die Hubplattform 7a, 7b durch die Geometrie der Kniehebel 19a, 19b und der Anordnung der Längslenker 22a, 22b an den Hubplattformen 7a, 7b und den Führungselementen 9 eine leichte bogenförmige Bahn und bewegt sich nicht ausschließlich linear beziehungsweise vertikal. Der maximale Versatz in beziehungsweise gegen die Fahrtrichtung F der Hubplattformen während des Hub- beziehungsweise Senkvorgangs bewegt sich etwa im Bereich weniger Millimeter, d.h. 2 bis 10 mm. Die Hubhöhe der Hubplattform 7a, 7b liegt etwa im Bereich von 600 mm. In der Übergabestellung und der Ruhestellung stimmen die Positionen der Hubplattformen 7a, 7b in und quer zur Fahrtrichtung F des Fahrzeuges 1 gesehen überein.

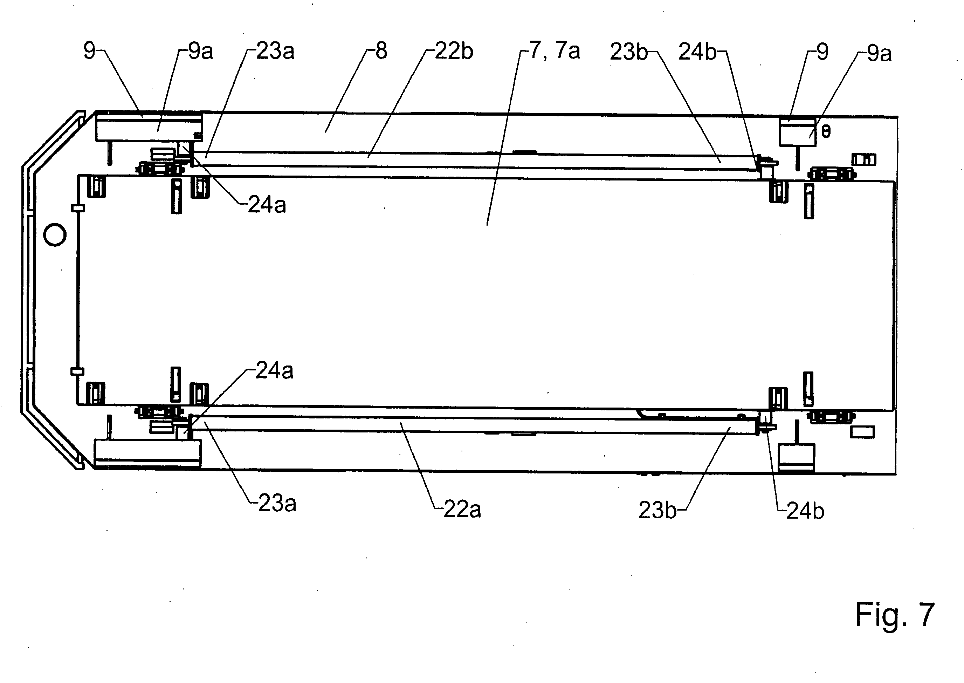

In der Figur 7 ist eine Draufsicht auf die zweiten Hubplattform 7b gemäß Figur 6 gezeigt. Insbesondere lässt sich hieraus erkennen, dass in Fahrtrichtung F des Fahrzeugs 1 gesehen die Längslenker 22a, 22b seitlich neben der Hubplattform 7b auf der rechten und der linken Seite angeordnet sind und parallel zu der Längsseite oder Hubplattform 7b verlaufen und hierzu einen Abstand aufweisen, der etwa die Breite des Längslenkers 22a, 22b aufweist. Als wichtig ist bei der Anordnung der Längslenker noch zu erwähnen, dass die Anlenkpunkte der Längslenker 22a, 22b über die Achsen 24a, 24b an der Hubplattform 7b und dem Führungselement 9 jeweils gegenüberliegend angeordnet sind. Auch ist aus dieser Ansicht ersichtlich, dass die Führungselemente 9 an deren einander zugewandten Innenseite Führungsflächen 9a aufweisen.

Die vorliegende Erfindung ist an Hand eines flurgebundenen Transportfahrzeuges für den Transport von Containern beschrieben worden. Grundsätzlich ist es möglich, auch andere schweren Lasten wie beispielsweise Brammen, Coils in der Hütten-, Stahl- und Walzwerkstechnik zu transportieren.

### Bezugszeichenliste

- 1: automatisch geführtes Fahrzeug
- 1a: Reifen
- 2: Übergabestation
- 3: Traggestell
- 3a: Beine
- 3b: Tragschiene
- 3c: Endfläche
- 3d: Tragfläche
- 4: Boden
- 5: Container
- 5a: Eckbeschlag
- 5b: Längsseite
- 5c: Unterfläche
- 6: Einfahrkanal
- 7: Hubplattform
- 7a: erste Hubplattform
- 7b: zweite Hubplattform
- 8: Fahrzeugrahmen
- 9: Führungselement
- 9a: Führungsfläche
- 10: Hubantrieb
- 11: Antriebsmotor
- 12: Getriebe
- 13a, 13b: Kardan-Welle
- 14a, 14b: erstes Kardangelenk
- 15a, 15b: zweites Kardangelenk
- 16a, 16b: Stellspindelantrieb
- 16c, 16d: Stellspindel
- 16e, 16f: Stellspindelmutter
- 16g, 16h: Stellhebel
- 17: Lagerbock
- 18: Achse
- 19, 19a, 19b: Kniehebel

## Patentansprüche

1. Flurgebundenes Transportfahrzeug (1) für den Transport von Containern (5) mit mindestens einer auf einem Fahrzeugrahmen (8) des Transportfahrzeuges (1) angeordneten Hubplattform (7), die aus einer abgesenkten Transportstellung über mindestens einen Hubantrieb (10) in eine angehobene Übergabestellung anhebbar beziehungsweise umgekehrt absenkbar ist, wobei jede Hubplattform (7) über in Fahrtrichtung (F) des Transportfahrzeuges (1) gesehen ausschließlich zwei Kniehebel (19a, 19b) auf dem Fahrzeugrahmen (8) befestigt ist, die Hubplattform (7) über die zwei Kniehebel (19a, 19b) anhebbar beziehungsweise absenkbar ist, der mindestens eine Hubantrieb (10) auf die zwei Kniehebel (19a, 19b) wirkt und die Hubplattform (7) für die Hub- und Senkbewegung an dem Transportfahrzeug (1) geführt ist, wobei jeder Kniehebel (19a, 19b) in Fahrtrichtung (F) des Transportfahrzeuges (1) gesehen sich über mehr als die Hälfte der Breite der Hubplattform (7), insbesondere mehr als 75% der Breite der Hubplattform (7), erstreckt, **dadurch gekennzeichnet, dass** je Hubplattform ein Hubantrieb (10) vorgesehen ist, der gemeinsam auf die beiden Kniehebel (19a, 19b) wirkt.

2. Transportfahrzeug nach Anspruch 1, **dadurch gekennzeichnet, dass** in Fahrtrichtung (F) des Transportfahrzeuges (1) der erste Kniehebel (19a) vorne und der zweite Kniehebel (19a) hinten an der Hubplattform (7) angeordnet ist.

3. Transportfahrzeug nach Anspruch 1 oder 2, **dadurch gekennzeichnet, dass** jeder Kniehebel (19, 19a, 19b) aus einem erstem Kniehebelarm (19c, 19d) und aus einem zweiten Kniehebelarm (19g, 19h) besteht, die über einen Kniehebelgelenk (19e, 19f) miteinander verbunden sind, der erste Kniehebelarm (19c, 19d) an seinem dem Kniehebelgelenk (19e, 19f) abgewandten Ende über eine untere Achse (21 a, 21 b) an dem Fahrzeugrahmen (8) gelagert ist und der zweite Kniehebelarm (19g, 19h) an seinem dem Kniehebelgelenk (19e, 19f) abgewandten Ende über eine obere Achse (20a, 20b) an der Hubplattform (7) gelagert ist.

4. Transportfahrzeug nach Anspruch 3, **dadurch gekennzeichnet, dass** die unteren Achsen (21a, 21b), die Achsen der scharnierartigen Kniehebelgelenke (19e, 19f) und die oberen Achsen (20a, 20b) parallel zueinander verlaufen.

5. Transportfahrzeug nach Anspruch 3 oder 4, **dadurch gekennzeichnet, dass** die beiden Kniehebel (19, 19a, 19b) derart zwischen der Hubplattform (7) und dem Fahrzeugrahmen (8) angeordnet sind, dass die Kniehebelgelenke (19e, 19f) sich bei einer Bewegung der Hubplattform (7) aus der Übergabestellung in die Ruhestellung aufeinander zu bewegen.

6. Transportfahrzeug nach einem der Ansprüche 1 bis 5, **dadurch gekennzeichnet, dass** die Hubplattform (7) über mindestens einen Längslenker (22a, 22b) an dem Fahrzeugrahmen (8) geführt ist, der Längslenker (22a, 22b) an seinem ersten Ende (23a, 23b) über eine erste Achse (24a) an der Hubplattform (7) angelenkt ist und an seinem gegenüberliegenden zweiten Ende (24a, 24b) über eine zweite Achse (24b) an dem Fahrzeugrahmen (8) angelenkt ist.

7. Transportfahrzeug nach Anspruch 6, **dadurch gekennzeichnet, dass** die Längslenker (22a, 22b) und die Kniehebel (19a, 19b) derart dimensioniert sind; dass die Positionen der Hubplattform (7) in der Transportstellung und der Übergabestellung in und quer zur Fahrtrichtung (F) des Fahrzeuges (1) gesehen übereinstimmen.

8. Transportfahrzeug nach Anspruch 6 oder 7, **dadurch gekennzeichnet, dass** die erste Achse (24a) und die zweite Achse (24b) parallel zueinander verlaufen und parallel zu den unteren Achsen (21a, 21 b), den Achsen der scharnierartigen Kniehebelgelenke (19e, 19f) und den oberen Achsen (20a, 20b) verlaufen.

9. Transportfahrzeug nach einem der Ansprüche 6 bis 8, **dadurch gekennzeichnet, dass** die in Fahrtrichtung (F) des Transportfahrzeuges (1) gesehen rechts und links neben der Hubplattform (7) jeweils ein Längslenker (22a, 22b) angeordnet ist und die beiden Längslenker (22a, 22b) parallel zueinander verlaufen.

10. Transportfahrzeug nach einem der Ansprüchen 1 bis 9, **dadurch gekennzeichnet, dass** in Fahrtrichtung (F) des Transportfahrzeuges (1) gesehen zwei Hubplattformen (7a, 7b) unmittelbar hintereinander unter Einhaltung eines Abstands angeordnet sind.

11. Transportfahrzeug nach Anspruch 10, **dadurch gekennzeichnet, dass** die Hubplattformen (7a, 7b) derart dimensioniert sind, dass in Fahrtrichtung (F) des Transportfahrzeuges (1) gesehen von jeder Hubplattform (7a, 7b) ein 20-Fuß-Container (8) aufnehmbar ist oder in Fahrtrichtung (F) des Transportfahrzeuges (1) gesehen von beiden Hubplattformen (7a, 7b) gemeinsam ein 40-Fuß-Container (8) beziehungsweise ein 45-Fuß-Container (8) aufnehmbar ist.

12. Transportfahrzeug nach einem der Ansprüche 1 bis 11, **dadurch gekennzeichnet, dass** der Hubantrieb (10) aus einem auf dem Transportfahrzeug (1) angeordneten Antriebsmotor (11) besteht, der über ein Getriebe (12) und zwei Stellspindeltriebe (16a, 16b) auf die beiden Kniehebel (19a, 19b) wirkt.

## Claims

1. Ground handling vehicle (1) for handling containers (5), having at least one lifting platform (7) which is arranged on the chassis (8) of the handling vehicle (1) and which, by means of at least one lifting drive (10), can be raised from a lowered position for handling to a raised position for transfer or can be lowered in the reverse sequence, each lifting platform (7) being fastened to the chassis (8) of the vehicle solely by, looking in the direction of travel (F) of the handling vehicle (1), two toggle mechanisms (19a, 19b), the lifting platform (7) being able to be raised and lowered by means of the two toggle mechanisms (19a, 19b), the at least one lifting drive (10) acting on the two toggle mechanisms (19a, 19b), and the lifting platform (7) being guided on the handling vehicle (1) for the raising and lowering movements, with each toggle mechanism (19a, 19b) extending, looking in the direction of travel (F) of the handling vehicle (1), across more than half the width of the lifting platform (7) and in particular across more than 75% of the width of the lifting platform (7), **characterised in that** each lifting platform has provided for it a lifting drive (10) which acts on both the toggle mechanisms (19a, 19b) together.

2. Handling vehicle according to claim 1, **characterised in that**, in the direction of travel (F) of the handling vehicle (1), the first toggle mechanism (19a) is arranged at the front of the lifting platform (7) and the second toggle mechanism (19a) is arranged at the rear of the lifting platform (7).

3. Handling vehicle according to claim 1 or 2, **characterised in that** each toggle mechanism (19, 19a, 19b) comprises a first link (19c, 19d) and a second link (19g, 19h) which are connected together by a toggle joint (19e, 19f), the first link (19c, 19d) being mounted on the chassis (8) of the vehicle at its end remote from the toggle joint (19e, 19f) via a bottom shaft (21 a, 21 b) and the second link (19g, 19h) being mounted on the lifting platform (7) at its end remote from the toggle joint (19e, 19f) via a top shaft (20a, 20b).

4. Handling vehicle according to claim 3, **characterised in that** the bottom shafts (21a, 21b), the shafts of the hinge-like toggle joints (19e, 19f) and the top shafts (20a, 20b) extend parallel to one another.

5. Handling vehicle according to claim 3 or 4, **characterised in that** the two toggle mechanisms (19, 19a, 19b) are so arranged between the lifting platform (7) and the chassis (8) of the vehicle that the toggle joints (19e, 19f) move towards one another when the lifting platform (7) moves from the transfer position to the rest position.

6. Handling vehicle according to one of claims 1 to 5, **characterised in that** the lifting platform (7) is guided on the chassis (8) of the vehicle by at least one longitudinal link (22a, 22b), and the longitudinal link (22a, 22b) is hinged to the lifting platform (7) at its first end (23a, 23b) by a first shaft (24a) and to the chassis (8) of the vehicle at its opposite, second, end (24a, 24b) by a second shaft (24b).

7. Handling vehicle according to claim 6, **characterised in that** the longitudinal links (22a, 22b) and the toggle mechanisms (19a, 19b) are so sized that the positionings of the lifting platform (7) in the position for handling and the position for transfer are the same when looking in the direction of travel (F) of the vehicle (1) and when looking at right angles thereto.

8. Handling vehicle according to claim 6 or 7, **characterised in that** the first shaft (24a) and the second shaft (24b) extend parallel to one another and parallel to the bottom shafts (21a, 21b), the shafts of the hinge-like toggle joints (19e, 19f) and the top shafts (20a, 20b).

9. Handling vehicle according to one of claims 6 to 8, **characterised in that**, looking in the direction of travel (F) of the handling vehicle (1), longitudinal links (22a, 22b) are arranged next to the lifting platform (7) on the right and left respectively and these two longitudinal links (22a, 22b) extend parallel to one another.

10. Handling vehicle according to one of claims 1 to 9, **characterised in that**, looking in the direction of travel (F) of the handling vehicle (1), two lifting platforms (7a, 7b) are arranged one immediately behind the other with a spacing left between them.

11. Handling vehicle according to claim 10, **characterised in that** the lifting platforms (7a, 7b) are so sized that, looking in the direction of travel (F) of the handling vehicle (1), a 20-foot container can be received by each lifting platform (7a, 7b) or, looking in the direction of travel (F) of the handling vehicle (1), a 40-foot container (8) or a 45-foot container (8) can be received by both lifting platforms (7a, 7b) together.

12. Handling vehicle according to one of claims 1 to 11, **characterised in that** the lifting drive (10) comprises a drive motor (11), arranged on the handling vehicle (1), which acts on the two toggle mechanisms (19a, 19b) via a gearbox (12) and two actuating-spindle transmissions (16a, 16b).

## Revendications

1. Véhicule de transport lié au sol (1) pour le transport de conteneurs (5), ledit véhicule de transport comportant au moins une plate-forme de levage (7) qui est disposée sur un châssis de véhicule (8) du véhicule de transport (1) et qui peut être soulevée d'une position de transport abaissée dans une position de transfert soulevée, réciproquement abaissée en sens inverse, au moyen d'au moins un mécanisme de levage (10), chaque plate-forme de levage (7) étant fixée exclusivement par deux leviers coudés (19a, 19b) sur le châssis de véhicule (8) lorsque l'on regarde dans la direction de roulement (F) du véhicule de transport (1), la plate-forme de levage (7) pouvant être soulevée respectivement abaissée au moyen des deux leviers coudés (19a, 19b), l'au moins un mécanisme de levage (10) agissant sur les deux leviers coudés (19a, 19b) et la plate-forme de levage (7) étant guidée au niveau du véhicule de transport (1) en vue du mouvement de levage et d'abaissement, chaque levier coudé (19a, 19b) s'étendant sur plus de la moitié de la largeur de la plate-forme de levage (7), notamment plus de 75% de la largeur de la plate-forme de levage (7) lorsque l'on regarde dans la direction de roulement (F) du véhicule de transport (1), **caractérisé en ce qu'**il est prévu pour chaque plate-forme de levage un mécanisme de levage (10) qui agit simultanément sur les deux leviers coudés (19a, 19b).

2. Véhicule de transport selon la revendication 1, **caractérisé en ce que**, par référence à la direction de roulement (F) du véhicule de transport (1), le premier levier coudé (19a) est disposé à l'avant de la plate-forme de levage (7) et le second levier coudé (19a) est disposé à l'arrière de la plate-forme de levage (7).

3. Véhicule de transport selon la revendication 1 ou 2, **caractérisé en ce que** chaque levier coudé (19, 19a, 19b) se compose d'un premier bras de levier coudé (19c, 19d) et d'un second bras de levier coudé (19g, 19h) qui sont reliés l'un à l'autre par une articulation de levier coudé (19e, 19f), le premier bras de levier coudé (19c, 19d) est monté, à son extrémité qui est opposée à l'articulation de levier coudé (19e, 19f), sur le châssis de véhicule (8) par le biais d'un axe inférieur (21a, 21b) et le second bras de levier coudé (19g, 19h) est monté, à son extrémité qui est opposée à l'articulation de levier coudé (19e, 19f), sur la plate-forme de levage (7) par le biais d'un axe supérieur (20a, 20b).

4. Véhicule de transport selon la revendication 3, **caractérisé en ce que** les axes inférieurs (21a, 21b), les axes des articulations de levier coudé de type charnière (19e, 19f) et les axes supérieurs (20a, 20b) s'étendent parallèlement l'un à l'autre.

5. Véhicule de transport selon la revendication 3 ou 4, **caractérisé en ce que** les deux leviers coudés (19, 19a, 19b) sont disposés entre la plate-forme de levage (7) et le châssis de véhicule (8) de telle sorte que les articulations de levier coudé (19e, 19f) se déplace l'un vers l'autre lorsque la plate-forme de levage (7) se déplace de la position de transfert dans la position de repos.

6. Véhicule de transport selon l'une des revendications 1 à 5, **caractérisé en ce que** la plate-forme de levage (7) est guidée au niveau du châssis de véhicule (8) au moyen d'au moins un bras oscillant longitudinal (22a, 22b), le bras oscillant longitudinal (22a, 22b) est monté de façon articulée, au niveau de sa première extrémité (23a, 23b), sur la plate-forme de levage (7) au moyen d'un premier axe (24a) et est monté de façon articulée sur le châssis de véhicule (8), au niveau de sa seconde extrémité opposée (24a, 24b) au moyen d'un second axe (24b).

7. Véhicule de transport selon la revendication 6, **caractérisé en ce que** le bras oscillant longitudinal (22a, 22b) et les leviers coudés (19a, 19b) sont dimensionnés de telle sorte que, lorsque l'on regarde dans la direction de roulement (F) du véhicule (1) et transversalement à celle-ci, les positions de la plate-forme de levage (7) dans la position de transport et dans la position de transfert coïncident.

8. Véhicule de transport selon la revendication 6 ou 7, **caractérisé en ce que** le premier axe (24a) et le second axe (24b) s'étendent parallèlement l'un à l'autre et parallèlement aux axes inférieurs (21a, 21b), aux axes de l'articulation de levier coudé de type charnière (19e, 19f) et aux axes supérieurs (20a, 20b).

9. Véhicule de transport selon l'une des revendications 6 à 8, **caractérisé en ce qu'**un bras oscillant longitudinal (22a, 22b) est disposé à droite et à gauche à côté de la plate-forme de levage (7) lorsque l'on regarde dans la direction de roulement (F) du véhicule de transport (1) et les deux bras oscillants longitudinaux (22a, 22b) s'étendent parallèlement l'un à l'autre.

10. Véhicule de transport selon l'une des revendications 1 à 9, **caractérisé en ce que**, lorsque l'on regarde dans la direction de roulement (F) du véhicule de transport (1), deux plates-formes de levage (7a, 7b) sont disposées l'une immédiatement derrière l'autre en maintenant une distance.

11. Véhicule de transport selon la revendication 10, **caractérisé en ce que** les plates-formes (7a, 7b) sont dimensionnées de telle sorte que, lorsque l'on regarde dans la direction de roulement (F) du véhicule de transport (1), un conteneur de 20 pieds (8) peut être reçu sur chaque plate-forme de levage (7a, 7b) ou, lorsque l'on regarde dans la direction de roulement (F) du véhicule de transport (1), un conteneur de 40 pieds (8) respectivement un conteneur de 45 pieds (8) peuvent être reçus simultanément sur les deux plates-formes de levage (7a, 7b).

12. Véhicule de transport selon l'une des revendications 1 à 11, **caractérisé en ce que** le mécanisme de levage (10) se compose d'un moteur d'entraînement (11) qui est disposé sur le véhicule de transport (1) et qui agit sur les deux leviers coudés (19a, 19b) par le biais d'une transmission (12) et de deux commandes à broche de réglage (16a, 16b).
